# EUROPEAN PATENT APPLICATION

(11) **EP 4 390 871 A1**
(43) Date of publication of application: **26.06.2024**
(21) Application number: 23213271.2
(22) Date of filing: 30.11.2023
(51) Int. Cl.: G06V 10/82, G06V 20/40, G06V 20/52

(54) **VIDEO ANONYMIZATION METHOD AND APPARATUS, ELECTRONIC DEVICE, AND STORAGE MEDIUM**

(30) Priority: 22.12.2022 CN 202211658726
(71) Applicant: Chongqing Changan Automobile Co., Ltd., Chongqing 400023 (CN)
(72) Inventor: Cao, Bintao, Chongqing 400023 (CN); Lu, Bin, Chongqing 400023 (CN); Li, Ping, Chongqing 400023 (CN); Zheng, Hui, Chongqing 400023 (CN); Weng, Jianglin, Chongqing 400023 (CN)
(74) Representative: Patentanwaltskanzlei Matschnig & Forsthuber OG

(57) **Abstract**

A video anonymization method and apparatus, an electronic device, and a storage medium are disclosed. The method includes: extracting a plurality of first video frames from a to-be-processed video to obtain a first video frame sequence; performing key object recognition on the first video frames; determining, if key objects are recognized from the first video frames, an image region where the key objects are located as a detected key image region, and replacing original images therein with predetermined images to obtain first anonymized frames; and replacing the first video frames in the first video frame sequence until all the first video frames have been replaced to obtain a first anonymized frame sequence. According to the method, video frames in a to-be-processed video are partially anonymized to anonymize the video without being processed wholly, thus reducing the workload of anonymization, reducing excessive demands for platform computing power, effectively solving the technical problem of large computing power resources required by the existing anonymization, and effectively improving the efficiency of anonymization as the number of to-be-processed frames is reduced.

## Description

### Field of the Invention

The present disclosure relates to the field of computers, and in particular, to a video anonymization method and apparatus, an electronic device, and a storage medium.

### Background of the Invention

With the improvement of people's living standards and the rapid development of the global intelligent Internet-based automobile industry, data security issues of intelligent automobiles begin to arouse more and more attention from the outside world. The penetration of intelligent Internet-based automobiles continues to improve. The intelligent functions such as driving assistance, remote parking, and voice interaction have brought new driving experience for users, and also produce a large amount of information, which is easy to be collected, shared, and used by relevant enterprises in the background. Protection measures for personal privacy of users are the issues concerned by the existing market manufacturers.

In the related technology, anonymization algorithms are mostly integrated in a cloud computing center. Relevant video files are uploaded to a cloud and then anonymized at the cloud. The existing market vehicle chip hardware resources have limited available hardware resources due to multifunctional integration, but the existing anonymization algorithms have a large resource consumption and are difficult to be integrated in an existing platform. In addition, the existing anonymization algorithms are less efficient in anonymization due to the large resource consumption.

### Summary of the Invention

An object of embodiments of the present disclosure is to provide a video anonymization method and apparatus, an electronic device, and a storage medium, so as to solve the problems of large computing power resources and low efficiency of anonymization in the existing technology.

The present disclosure provides a video anonymization method. The video anonymization method includes: extracting a plurality of first video frames from a to-be-processed video to obtain a first video frame sequence, where initial sorts of at least two first video frames are not adjacent, and the initial sorts are sorts of the video frames in the to-be-processed video; performing key object recognition on the first video frames; determining, if key objects are recognized from the first video frames, an image region where the key objects are located as a detected key image region; replacing original images in the detected key image region with predetermined images to obtain first anonymized frames; and replacing the first video frames in the first video frame sequence with the first anonymized frames until all first target frames have been replaced to obtain a first anonymized frame sequence, the first target frames being the first video frames with the key objects.

In an embodiment of the present disclosure, the performing key object recognition on the first video frames includes: performing image segmentation on each first video frame to obtain a plurality of feature frame image regions; inputting a plurality of feature frame images into a predetermined key object recognition model for key object recognition to obtain at least one feature frame image region containing key objects; and labeling the at least one feature frame image region containing key objects to obtain at least one detected key image region.

In an embodiment of the present disclosure, the predetermined key object recognition model is constructed by: acquiring a plurality of different frame image data as sample image data, the frame image data including key object image data; performing key object feature labeling on a key object image region in the sample image data to obtain a sample data set; and establishing a deep learning model based on the sample data set, training the deep learning model to obtain a key object recognition model, and determining the key object recognition model as the predetermined key object recognition model.

In an embodiment of the present disclosure, after determining an image region where the key objects are located as a detected key image region, the video anonymization method further includes: extracting a plurality of second video frames from the to-be-processed video, the second video frames being different from the first video frames, and an initial sort of each second video frame being adjacent to the initial sort of at least one first video frame; determining a position change trajectory according to detection position information of the detected key image region in at least part of the first video frames; predicting a predicted key image region position in the second video frame based on the position change trajectory to obtain each predicted key image region position in the second video frame; and replacing original images in the predicted key image region with predetermined images to obtain second anonymized frames.

In an embodiment of the present disclosure, the predicting a predicted key image region position in the second video frame based on the position change trajectory includes: determining, if a sort gap between the initial sorts of at least two first video frames and the initial sort of the second video frame is less than a predetermined gap, the first video frames as associated video frames of the second video frame; acquiring detection position information of the detected key image region in each associated video frame; and generating the position change trajectory based on each detection position information to fit the predicted key image region position in the second video frame through the position change trajectory.

In an embodiment of the present disclosure, after replacing original images in the predicted key image region with predetermined images to obtain second anonymized frames, the video anonymization method further includes: replacing the second video frames in a second video frame sequence with the second anonymized frames until all the second video frames have been replaced to obtain a second anonymized frame sequence.

In an embodiment of the present disclosure, after determining the second anonymized frame sequence as a second anonymized video of the to-be-processed video, the video anonymization method further includes: arranging the second anonymized frame sequence and the first anonymized frame sequence according to an initial sort to obtain an anonymized output frame sequence.

In an embodiment of the present disclosure, after sequentially interpolating the second anonymized frame sequence into the first anonymized frame sequence to obtain an anonymized output frame sequence, the video anonymization method further includes: acquiring frame rate information of the to-be-processed video; and performing frame rate adjustment on the anonymized output frame sequence according to the frame rate information to obtain an anonymized output video.

In an embodiment of the present disclosure, before extracting a plurality of first video frames from a to-be-processed video, the video anonymization method further includes: acquiring a to-be-processed video, and performing image desensitization processing on an initial frame of the to-be-processed video, the image desensitization processing including at least one of privacy information clearing and image noising.

Embodiments of the present disclosure further provide a video anonymization apparatus. The video anonymization apparatus includes: a video frame acquisition module, configured to extract a plurality of first video frames from a to-be-processed video to obtain a first video frame sequence, where initial sorts of at least two first video frames are not adjacent, and the initial sorts are sorts of the video frames in the to-be-processed video; a key object recognition module, configured to perform key object recognition on the first video frames, and determine, if key objects are recognized from the first video frames, an image region where the key objects are located as a detected key image region; an anonymization module, configured to replace original images in the detected key image region with predetermined images to obtain first anonymized frames; and an anonymized frame replacement module, configured to replace the first video frames in the first video frame sequence with the first anonymized frames until all first target frames have been replaced to obtain a first anonymized frame sequence, the first target frames being the first video frames with the key objects.

Embodiments of the present disclosure further provide an electronic device, including: one or more processors; and a storage apparatus, configured to store one or more programs which, when executed by the one or more processors, cause the electronic device to implement the video anonymization method as described in any of the foregoing embodiments.

Embodiments of the present disclosure further provide a computer-readable storage medium, including computer-readable instructions stored thereon. The computer-readable instructions, when executed by a processor of a computer, cause the computer to implement the video anonymization method as described in any of the foregoing embodiments.

A video anonymization method and apparatus, an electronic device, and a storage medium are provided in the embodiments of the present disclosure. The method includes: extracting a plurality of first video frames from a to-be-processed video to obtain a first video frame sequence; performing key object recognition on the first video frames; determining, if key objects are recognized from the first video frames, an image region where the key objects are located as a detected key image region, and replacing original images therein with predetermined images to obtain first anonymized frames; and replacing the first video frames in the first video frame sequence until all the first video frames have been replaced to obtain a first anonymized frame sequence. According to the method, video frames in a to-be-processed video are partially anonymized to anonymize the video without being processed wholly, thus reducing the workload of anonymization, reducing excessive demands for platform computing power, effectively solving the technical problem of large computing power resources required by the existing anonymization, and effectively improving the efficiency of anonymization as the number of to-be-processed frames is reduced.

It will be understood that both the above general description and the following detailed description are exemplary and explanatory only and are not restrictive of the present disclosure.

### Brief Description of the Drawings

The accompanying drawings, which are incorporated in and constitute a part of this specification, illustrate embodiments consistent with the present disclosure and, together with the specification, serve to explain the principles of the present disclosure. It is obvious that the drawings in the following description are only some embodiments of the present disclosure, and those of ordinary skill in the art would have been able to obtain other drawings according to these drawings without involving any inventive effort. In the drawings:
Fig. 1 is a schematic diagram of an exemplary system architecture according to an exemplary embodiment of the present disclosure;
Fig. 2 is a flowchart of a video anonymization method according to an exemplary embodiment of the present disclosure;
Fig. 3 is a flowchart of a second video frame fitting process according to an exemplary embodiment of the present disclosure;
Fig. 4 is a flowchart of a specific video anonymization method implemented according to an exemplary embodiment of the present disclosure;
Fig. 5 shows a video anonymization apparatus according to an exemplary embodiment of the present disclosure;
Fig. 6 is a schematic diagram of a video anonymized data transmission flow structure according to an exemplary embodiment of the present disclosure; and
Fig. 7 is a schematic structural diagram of a computer system of an electronic device according to an exemplary embodiment of the present disclosure.

### Detailed Description of the Embodiments

Implementations of the present disclosure will be described below with reference to the accompanying drawings and specific embodiments, and other advantages and effects of the present disclosure will be readily apparent to those skilled in the art from the disclosure in this specification. The present disclosure may also be practiced or applied by other different implementations, and the details of this specification may be modified or altered from different viewpoints and applications without departing from the spirit of the present disclosure. It will be understood that the preferred embodiments are merely illustrative of the present disclosure and are not intended to limit the scope of protection of the present disclosure.

It is to be noted that the figures provided in the following embodiments merely illustrate the basic idea of the present disclosure schematically, and thus the figures only show the components related to the present disclosure rather than being drawn according to the number, shape, and size of the components in actual implementation. The type, number, and proportion of the components in actual implementation may be arbitrarily changed, and the layout of the components may be more complicated.

In the following description, numerous details are set forth in order to provide a thorough explanation of the embodiments of the present disclosure. However, it will be apparent to those skilled in the art that the embodiments of the present disclosure may be practiced without these specific details. In other embodiments, well-known structures and devices are shown in the form of block diagrams, rather than in detail, in order to avoid obscuring the embodiments of the present disclosure.

The term "and/or" referred to in the present disclosure describes an association relationship of associated objects, indicating that three relationships may exist. For example, A and/or B may indicate three cases of A alone, A and B together, and B alone. The character "/" generally indicates that the associated objects have an "or" relationship.

Firstly, it is to be noted that video anonymization refers to a process of anonymization of key information in a video in order that the key information is unrecognizable. The foregoing anonymization methods at least include perturbation and generalization methods, K anonymization and I diversity methods, distributed privacy protection, effects of reducing data mining results, differential privacy protection methods, and methods of replacing key information.

Benefits that may also be provided by the present disclosure include: fitting other unprocessed frames according to a key object region in a recognized first video frame to determine to-be-anonymized key object region images of other frames in a to-be-processed video, anonymizing the fitted image regions, and finally replacing the anonymized frames in an initial frame sequence to obtain a final anonymized video, thus reducing the workload of recognizing and marking all frames, reducing the workload by replacing complex image processing with fitting processing, reducing the processing computing power demands, and improving the processing efficiency.

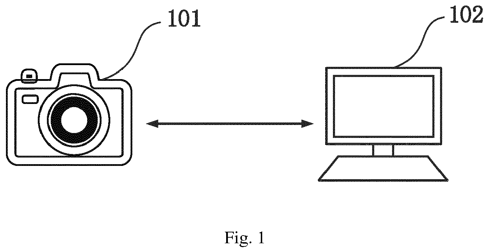

Fig. 1 is a schematic diagram of an exemplary system architecture according to an exemplary embodiment of the present disclosure.

Referring to Fig. 1, a system architecture may include an image acquisition apparatus 101 and a computer device 102. The image acquisition apparatus 101 is configured to acquire a to-be-processed video and provide the to-be-processed video to the computer device 102 for processing. The computer device 102 may be at least one of a microcomputer, an embedded computer, a network computer, and the like. Those skilled in the art may extract a plurality of first video frames from the to-be-processed video at the computer device 102 to obtain a first video frame sequence, perform key object recognition on the first video frames, determine, if key objects are recognized from the first video frames, an image region where the key objects are located as a detected key image region, and replace original images in the detected key image region with predetermined images to obtain first anonymized frames. Those skilled in the art may further replace the first video frames in the first video frame sequence with the first anonymized frames until all first target frames have been replaced to obtain a first anonymized frame sequence.

Illustratively, after the image acquisition device 101 extracts a plurality of first video frames from a to-be-processed video to obtain a first video frame sequence, the computer device 102 performs key object recognition on the first video frames, determines, if key objects are recognized from the first video frames, an image region where the key objects are located as a detected key image region, replaces original images therein with predetermined images to obtain first anonymized frames, and replaces the first video frames in the first video frame sequence until all the first video frames have been replaced to obtain a first anonymized frame sequence. According to the method, video frames in a to-be-processed video are partially anonymized to anonymize the video without being processed wholly, thus reducing the workload of anonymization, reducing excessive demands for platform computing power, effectively solving the problem of large computing power resources required by the existing anonymization, and effectively improving the efficiency of anonymization as the number of to-be-processed frames is reduced.

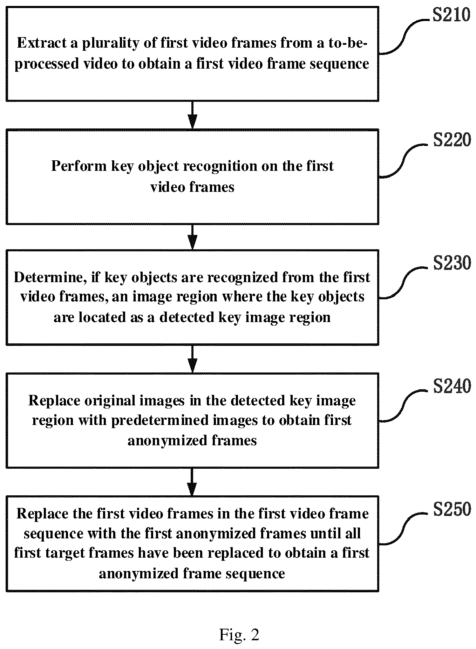

Fig. 2 is a flowchart of a video anonymization method according to an exemplary embodiment of the present disclosure. The video anonymization method may be implemented by a computing processing device. The computing processing device may be the computer device 102 shown in Fig. 1. Referring to Fig. 2, the video anonymization method includes at least steps S210 to S250, and the flowchart is described in detail as follows.

In step S210, a plurality of first video frames are extracted from a to-be-processed video to obtain a first video frame sequence.

In one embodiment of the present disclosure, before extracting a plurality of first video frames from a to-be-processed video, the method further includes: acquiring a to-be-processed video, and performing image desensitization processing on an initial frame of the to-be-processed video, the image desensitization processing including at least one of privacy information clearing and image noising.

In one embodiment of the present disclosure, initial sorts of at least two first video frames are not adjacent, and the initial sorts are sorts of the video frames in the to-be-processed video.

In one embodiment of the present disclosure, the first video frames are further extracted by: extracting, if a frame rate of the to-be-processed video is greater than an output video frame rate requirement, a predetermined number of initial frames from a time range of the to-be-processed video according to the output video frame rate requirement, determining the predetermined number of extracted initial frames as total to-be-processed frames, and then extracting a plurality of first video frames from the total to-be-processed frames. For example, if the frame rate of the to-be-processed video is 30 fps but the output video frame rate requirement is 20 fps, 20 frames are extracted from 30 frames per second of the to-be-processed video as to-be-processed frames. The total number of to-be-processed frames is the sum of the total number of first video frames and the total number of second video frames.

Other implementation schemes of this embodiment are different from the foregoing implementation schemes in that frames may be extracted from the to-be-processed video according to a minimum frequency with which human eyes recognize anonymization information in the video, so as to minimize the number of frames required to be processed and reduce the computing power requirements of a processing platform.

In one embodiment of the present disclosure, in the process of extracting a plurality of first video frames from the total to-be-processed frames, the ratio of the number of first video frames to the total number of to-be-processed frames may be set according to the computing power support of a computing platform. In this embodiment, the ratio of the number of first video frames to the total number of to-be-processed frames is set to 50%.

It is to be noted that setting the ratio of the number of first video frames to the total number of to-be-processed frames in the present disclosure is only one implementation of the present disclosure, and other ratio values may also be set for the ratio of the number of first video frames to the total number of to-be-processed frames. The setting of the ratio of the number of first video frames to the total number of to-be-processed frames is not limited herein.

In one embodiment of the present disclosure, the image desensitization processing is for resisting malicious recognition of an image and protecting relevant information of image collection, and effectively avoiding the leakage of original data information of the desensitized image. In this embodiment, the foregoing image desensitization includes: performing data desensitization processing on original data in an initial frame image in the to-be-processed video, and performing image data desensitization processing on the original data in the initial frame image in the to-be-processed video according to an image desensitization algorithm after acquiring the original data in the initial frame image in the to-be-processed video to obtain a desensitized initial frame image, so as to complete a desensitization processing operation on the to-be-processed video.

In one embodiment of the present disclosure, the operation of performing image desensitization processing on an initial frame of a to-be-processed video stream includes: performing privacy information clearing on the initial frame of the to-be-processed video stream, acquiring metadata of the initial frame of the to-be-processed video stream, and clearing metadata including but not limited to information containing image privacy of the initial frame, such as photographer information, date information, position information, hyperfocal distance, and brightness value, performing image sensitive information recognition on the to-be-processed video stream after the privacy information clearing according to desensitization accuracy requirements, and performing, if the image has image sensitive information, at least one of Gaussian noising processing and impulse noising processing on an image sensitive information region, where the image sensitive information includes but is not limited to an image watermark, an image time label, and a coordinate label. In step S220, key object recognition is performed on the first video frames.

In one embodiment of the present disclosure, key objects in this embodiment include, but are not limited to, face information, license plate information, vehicle privacy information, and special geographic information to be anonymized.

In one embodiment of the present disclosure, the performing key object recognition on the first video frames includes: performing image segmentation on each first video frame to obtain a plurality of feature frame image regions; inputting a plurality of feature frame images into a predetermined key object recognition model for key object recognition to obtain at least one feature frame image region containing key objects; and labeling the at least one feature frame image region containing key objects to obtain at least one detected key image region.

In one embodiment of the present disclosure, a target image is divided into several specific regions with unique properties by image segmentation, and a target of interest is proposed. Image segmentation is a key step from image processing to image analysis. From a mathematical point of view, image segmentation is a process of dividing a digital image into disjoint regions, and subsequent key object contour extraction is achieved by image segmentation.

In one embodiment of the present disclosure, the predetermined key object recognition model is constructed by: acquiring a plurality of different frame image data as sample image data, the frame image data including key object image data; performing key object feature labeling on a key object image region in the sample image data to obtain a sample data set; and establishing a deep learning model based on the sample data set, training the deep learning model to obtain a key object recognition model, and determining the key object recognition model as the predetermined key object recognition model.

In one embodiment of the present disclosure, deep learning is a multidisciplinary subject involving probability theory, statistics, approximation theory, convex analysis, algorithmic complexity theory, and the like. Deep learning focuses on how computers simulate or implement human learning behaviors to acquire new knowledge or skills and reorganize existing knowledge structure to improve its performance. Deep learning generally includes artificial neural network, belief network, reinforcement learning, transfer learning, inductive learning, teaching learning, and other technologies. In this embodiment, feature images are learned through a neural network model in a deep learning model to recognize key objects in the image.

In one embodiment of the present disclosure, the sample image data may be selected from existing historical image data or other image data by real-time image collection, and also by those skilled in the art. The purpose of collecting the sample image data is for subsequent deep learning training. During the deep learning training, the original sample data may be divided into a training sample data set and a verification sample data set. The proportion of verification sample data may be set in advance. Then, the sample data set is used for deep learning training, and the accuracy of deep learning training results is predicted and evaluated by the verification sample data set.

In one embodiment of the present disclosure, key object features may be labeled manually or automatically in this embodiment. The automatic labeling refers to a process of automatically adding text feature information reflecting the content of an image to the image through a machine learning method for the visual content of the image. Through the processing of an automatic image labeling technology, the problem of image information may be transformed into the problem of text information processing which is relatively mature.

In one embodiment of the present disclosure, a deep learning model is established based on a sample data set and is trained. The deep learning model may be a convolutional neural network model. The convolutional neural network has a characteristic learning capability and can perform translation invariant component on input information according to a hierarchical structure thereof. An input layer of the convolutional neural network may process multi-dimensional data. An input layer of a one-dimensional convolutional neural network receives a one-dimensional or two-dimensional array. A hidden layer of the convolutional neural network includes three types of common constructions: a convolutional layer, a pooling layer, and a full connection layer. The feature extraction may be performed on input data through the convolutional layer, which contains a plurality of convolutional kernels. Each element constituting the convolutional kernel corresponds to a weight coefficient and a deviation, similar to a neuron of a feed-forward neural network. Each neuron in the convolutional layer is connected to a plurality of neurons in a region closely located in the previous layer, and the size of the region depends on the size of the convolutional kernel. Matrix element multiplication and summation are performed on input features in a receptive field by regularly sweeping input features, and the deviation is superimposed. In the training process of the neural network model, training data may be used for training, but samples on a test set cannot be touched. The neural network model may be verified by constructing the verification data set.

It is to be noted that the convolutional neural model used at this moment is merely an exemplary implementation in the embodiments of the present disclosure, and may also be implemented by other deep learning models capable of image feature recognition during the specific implementation of this scheme, and the specific deep learning model is not specifically limited herein.

In step S230, if key objects are recognized from the first video frames, an image region where the key objects are located is determined as a detected key image region.

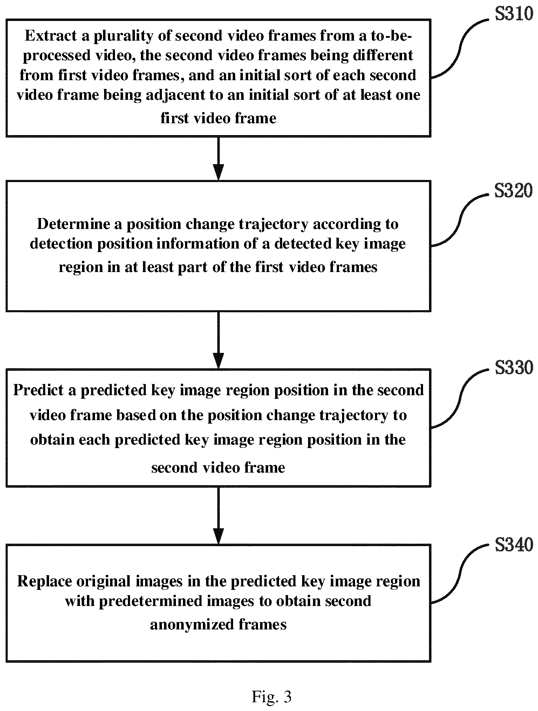

In one embodiment of the present disclosure, after determining an image region where the key objects are located as a detected key image region, the video anonymization method further includes: extracting a plurality of second video frames from the to-be-processed video and performing a fitting process, which may be specifically performed in the flowchart of a second video frame fitting process shown in Fig. 3. The second video frame fitting process may be performed by a computing processing device. The computing processing device may be the computer device 102 shown in Fig. 1.

Fig. 3 is a flowchart of a second video frame fitting process according to an exemplary embodiment of the present disclosure. Referring to Fig. 3, the video anonymization method includes at least steps S310 to S340, and the flowchart is described in detail as follows.

In step S310, a plurality of second video frames are extracted from the to-be-processed video. The second video frames are different from the first video frames, and an initial sort of each second video frame is adjacent to the initial sort of at least one first video frame.

In one embodiment of the present disclosure, the initial sort of each second video frame is adjacent to the initial sort of at least one first video frame, which means that a frame image of each second video frame is in an initial frame sequence of the to-be-processed video, and a previous frame and/or a next frame of the frame image of each second video frame is a frame image of the first video frame.

In one embodiment of the present disclosure, a positional relationship between the second video frames and the first video frames may be that the first video frames are odd frames and the second video frames are even frames, or the first video frames are even frames and the second video frames are odd frames. For example, if the to-be-processed video contains 8 frames in total, the first video frames are 1^{st}, 3^{rd}, 5^{th}, and 7^{th} frames initially sorted in the to-be-processed video, and the second video frames are 2^{nd}, 4^{th}, 6^{th}, and 8^{th} frames initially sorted in the to-be-processed video. It is also possible that there is a positional sort of two second video frames between two first video frames. For example, the first video frames are 1^{st} and 4^{th} frames initially sorted in the to-be-processed video, and the second video frames are 2^{nd} and 3^{rd} frames initially sorted in the to-be-processed video. The positional relationship between the second video frame and the first video frame may be adjusted according to the frame rate requirements of the video frames, and the specific positional relationship between the first video frames and the second video frames is not limited herein.

In step S320, a position change trajectory is determined according to detection position information of the detected key image region in at least part of the first video frames.

In one embodiment of the present disclosure, the detection position information refers to a specific position of the detected key image region in the first video frame in the frame image of the first video frame, and the position information may be expressed using coordinates, or using azimuths and distances.

In one embodiment of the present disclosure, the operation of determining a position change trajectory of each detected key image region in the first video frame may include: establishing a coordinate system in each first video frame, and establishing a coordinate system in each second video frame; acquiring coordinates of each detected key image region in the first video frame; and determining a position change trajectory according to the coordinates of each detected key image region of at least two first video frames.

In step S330, a predicted key image region position in the second video frame is predicted based on the position change trajectory to obtain each predicted key image region position in the second video frame.

In one embodiment of the present disclosure, if a sort gap between initial sorts of at least two first video frames and an initial sort of the second video frame is less than a predetermined gap, the first video frames are determined as associated video frames of the second video frame. The sort gap is used for describing the closeness of the sorts between the two frames. For example, if there are two frames of images between frame a and frame b, the sort gap between frame a and frame b is 2, and the predetermined gap may be set according to the accuracy requirement for predicting the position of a predicted key image region in the second video frame. As the predetermined gap is smaller, the degree of association between the initial sorts of the at least two first video frames and the second video frame is higher, and the accuracy of predicting the position of the predicted key image region in the second video frame is higher.

In one embodiment of the present disclosure, the sort gap is an absolute value of a difference between sort values of the initial sorts of the at least two first video frames and the initial sort of the second video frame.

In one embodiment of the present disclosure, detection position information of the detected key image region in each associated video frame is acquired, and the position change trajectory is generated based on each detection position information to fit the predicted key image region position in the second video frame through the position change trajectory.

In one embodiment of the present disclosure, fitting according to the coordinates of each detected key image region of at least two consecutive first video frames includes: obtaining a plurality of linear regression equations with picture sorts as independent variables and the coordinates of each detected key image region as dependent variables according to the coordinates of each detected key image region of at least two consecutive first video frames, determining predicted X-axis coordinates and predicted Y-axis coordinates of the coordinates of each detected key image region according to the plurality of linear regression equations respectively, and obtaining coordinates of each predicted key image region in the each second video frame.

In one embodiment of the present disclosure, the coordinate system may be established in each first video frame with a center point of the frame image as an origin, and may also be established with any point at an edge of the frame image as an origin, so as to describe the coordinates of each key image region, and the specific establishment mode of the coordinate system is not limited herein.

In one embodiment of the present disclosure, after determining the coordinates of the predicted key image region in the image, the predicted key image region is marked in the second video frame according to the coordinate position. The establishment of the coordinate system and the selection of the origin of the coordinate system in the second video frame needs to be consistent with the establishment of the coordinate system and the selection of the origin of the coordinate system in the first video frame.

In step S340, original images in the predicted key image region are replaced with predetermined images to obtain second anonymized frames.

In one embodiment of the present disclosure, after replacing original images in the predicted key image region with predetermined images to obtain second anonymized frames, the second video frames in a second video frame sequence are replaced with the second anonymized frames until all the second video frames have been replaced to obtain a second anonymized frame sequence.

In one embodiment of the present disclosure, in order to improve the accuracy of video anonymization, when a second video frame containing key objects in the previous first video frame adjacent to the second video frame in an initial frame sequence of the to-be-processed video is determined as a second target frame, each second video frame is judged. If key objects exist in the first video frame adjacent to a current second video frame, the current second video frame is determined as a second target frame, and a next second video frame is judged until all second target frames are determined. The second video frames in the second video frame sequence are replaced with second anonymized frames until all the second target frames have been replaced to obtain a second anonymized frame sequence.

In step S240, original images in the detected key image region are replaced with predetermined images to obtain first anonymized frames.

In one embodiment of the present disclosure, the foregoing predetermined images are used for anonymizing key objects, and the predetermined images include designated pictures, solid-colored pictures, vector pictures, and other pictures capable of blocking the key objects.

In another embodiment of the present disclosure, unlike the foregoing embodiments, anonymization of key objects includes, but is not limited to, fuzzification, erasure, mosaic, and the like.

In step S250, the first video frames in the first video frame sequence are replaced with the first anonymized frames until all first target frames have been replaced to obtain a first anonymized frame sequence.

In one embodiment of the present disclosure, after obtaining a second anonymized frame sequence, the video anonymization method further includes: arranging the second anonymized frame sequence and the first anonymized frame sequence according to an initial sort to obtain an anonymized output frame sequence.

In one embodiment of the present disclosure, after sequentially interpolating the second anonymized frame sequence into the first anonymized frame sequence to obtain an anonymized output frame sequence, the video anonymization method further includes: acquiring frame rate information of the to-be-processed video; and performing frame rate adjustment on the anonymized output frame sequence according to the frame rate information to obtain an anonymized output video.

In one embodiment of the present disclosure, the video frame rate requirement is above 25 fps in order to enhance the strong experience of users.

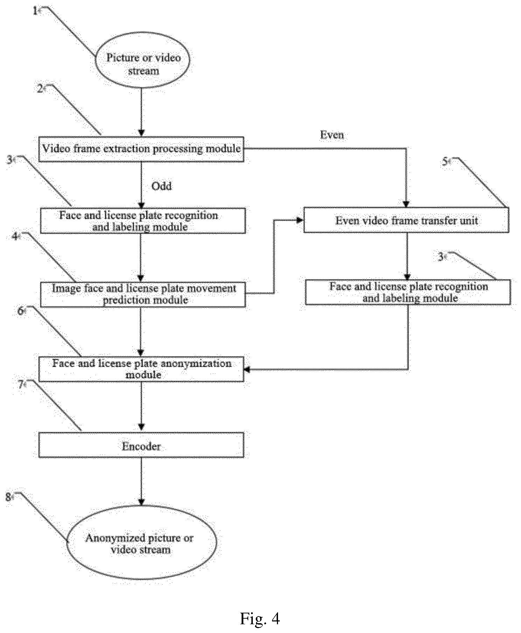

Reference is now made to Fig. 4. Fig. 4 is a flowchart of a specific video anonymization method implemented according to an exemplary embodiment of the present disclosure. The method may be applied to the implementation environment shown in Fig. 1 and implemented by the image acquisition apparatus 101 and the computer device 102 in the implementation environment. It will be understood that the method is also applicable to other exemplary implementation environments and may be specifically implemented by devices in other implementation environments, and this embodiment does not limit the implementation environment to which the method is applicable.

As shown in Fig. 4, in one specific embodiment of the present disclosure, 1 is an input video stream that contains the execution of the desensitization step of a picture. The format of the video stream may include a plurality of real-time video stream formats, such as a YUV format and a RGB format, and further include a plurality of cached video stream formats, such as mp4, avi, mov, wmv, 3gp, and ts. The file format of the picture may include JPEG, JPEG2000, BMP, PNG, and other picture formats.

In a specific embodiment of the present disclosure, 2 is a video frame extraction processing module which performs segmentation according to an original resolution and a frame rate after acquiring the video stream in 1, extracts each frame into corresponding image data, and groups and numbers the segmented image data sequentially. Odd frames are classified into group A, and even frames are classified into group B. The image data of group A is numbered as 2n+1, and the image data of group B is numbered as 2n, where n is 0 or a positive integer.

In one specific embodiment of the present disclosure, the key objects are faces and/or license plates.

In one specific embodiment of the present disclosure, image data of group A (odd group) is inputted to a face and license plate recognition and labeling module in 3. The module detects the image data, recognizes a face and/or a license plate in the image via a face and license plate detection algorithm, and labels a contour of the face and/or the license plate. After the labeling is completed, a labeled image file is inputted to an image face and license plate movement prediction module 4, and a movement trajectory of the face and/or the license plate thereof is fitted via face and/or license plate features. A position of a face and/or a license plate in an image of group B (even group) of a next frame of the image of group A is predicted, the predicted position of the face and/or the license plate is labeled in image data of group B in an even video frame transfer unit, and the labeled image data of group B and the labeled image data of group A are sent to a face and/or license plate anonymization module 6 for anonymization. Then, odd pictures and even pictures are sequentially inputted to an encoder 7, the pictures anonymized by the face and/or license plate anonymization module 6 are sequentially encoded to form a video stream with the same frame rate as 1, and the video stream is inputted to an output video stream 8 so as to obtain an anonymized picture or video stream.

In a specific embodiment of the present disclosure, the operation of fitting a movement trajectory of the face and/or the license plate thereof via face and/or license plate features and predicting a position of a face and/or a license plate in an image of group B (even group) of a next frame of the current picture includes: setting the position of the face and/or the license plate in the image of group A (odd group) as Fn(x, y), fitting the movement trajectory of the face and/or the license plate thereof via the face and/or license plate features, predicting the position of the face and/or the license plate in a next frame of image in image pictures of group A to obtain the predicted position of the face and/or the license plate as Fn+1(x, y), and labeling the predicted position Fn+1(x, y) of the face and/or the license plate in image data of group B in the even video frame transfer unit, where x is the abscissa of the position of the face and/or the license plate, y is the ordinate of the position of the face and/or the license plate, and n is 0 or a positive integer.

In a specific embodiment of the present disclosure, the next frame in the next frame of image in image pictures of group A refers to a next frame of image adjacent to the current image picture of group A according to an initial frame arrangement order of the input video stream, and the next frame of image of the image picture of group A is also an image picture of group B adjacent to the current image picture of group A.

A video anonymization method and apparatus, an electronic device, and a storage medium are provided in the embodiments of the present disclosure. The method includes: extracting a plurality of first video frames from a to-be-processed video to obtain a first video frame sequence; performing key object recognition on the first video frames; determining, if key objects are recognized from the first video frames, an image region where the key objects are located as a detected key image region, and replacing original images therein with predetermined images to obtain first anonymized frames; and replacing the first video frames in the first video frame sequence until all the first video frames have been replaced to obtain a first anonymized frame sequence. According to the method, video frames in a to-be-processed video are partially anonymized to anonymize the video without being processed wholly, thus reducing the workload of anonymization, reducing excessive demands for platform computing power, effectively solving the problem of large computing power resources required by the existing anonymization, and effectively improving the efficiency of anonymization as the number of to-be-processed frames is reduced. The method further includes: fitting other unprocessed frames according to the key object region in the recognized first video frame to determine to-be-anonymized key object region images of other frames in the to-be-processed video, anonymizing the fitted image regions, and finally replacing the anonymized frames in an initial frame sequence to obtain a final anonymized video, thus reducing the workload of recognizing and marking all frames, reducing the workload by replacing complex image processing with fitting processing, reducing the processing computing power demands, and improving the processing efficiency.

The following describes apparatus embodiments of the present disclosure that may be used to implement the video anonymization method in the foregoing embodiments of the present disclosure. For details not disclosed in system embodiments of the present disclosure, reference is made to the embodiments of the foregoing video anonymization method according to the present disclosure.

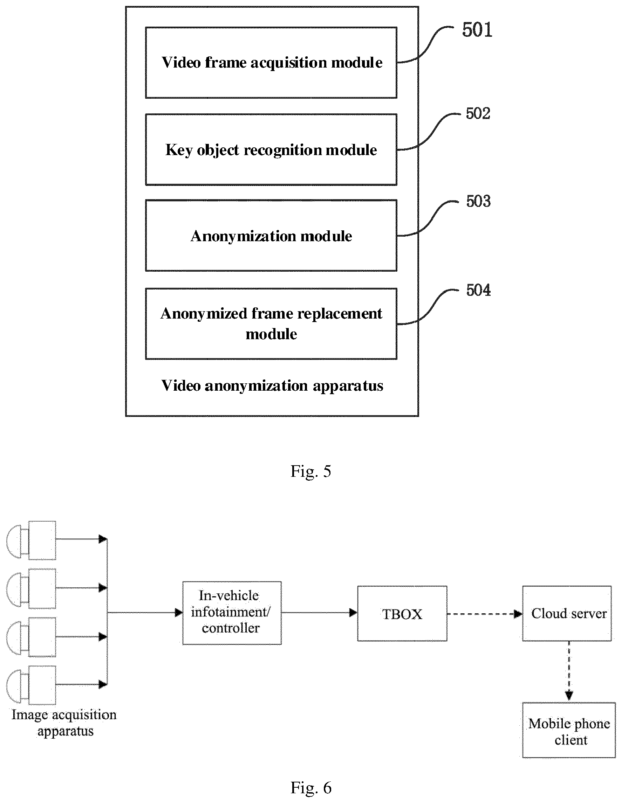

Fig. 5 shows a video anonymization apparatus according to an exemplary embodiment of the present disclosure. The apparatus may be used in the implementation environment shown in Fig. 2 and is specifically configured in the computer device 102. The apparatus is also applicable to other exemplary implementation environments and is specifically configured in other devices, and this embodiment does not limit the implementation environment to which the apparatus is applicable.

As shown in Fig. 5, the exemplary video anonymization apparatus includes: a video frame acquisition module 501, a key object recognition module 502, an anonymization module 503, and an anonymized frame replacement module 504.

The video frame acquisition module 501 is configured to extract a plurality of first video frames from a to-be-processed video to obtain a first video frame sequence, where initial sorts of at least two first video frames are not adjacent, and the initial sorts are sorts of the video frames in the to-be-processed video. The key object recognition module 502 is configured to perform key object recognition on the first video frames, and determine, if key objects are recognized from the first video frames, an image region where the key objects are located as a detected key image region. The anonymization module 503 is configured to replace original images in the detected key image region with predetermined images to obtain first anonymized frames. The anonymized frame replacement module 504 is configured to replace the first video frames in the first video frame sequence with the first anonymized frames until all first target frames have been replaced to obtain a first anonymized frame sequence, the first target frames being the first video frames with the key objects.

Fig. 6 is a schematic diagram of a video anonymized data transmission flow structure according to an exemplary embodiment of the present disclosure. As shown in Fig. 6, the video anonymized data transmission flow structure includes: a video acquisition apparatus, an in-vehicle infotainment/controller, a TBOX, a cloud server, and a mobile phone client.

The video acquisition apparatus is configured to generate a uniformly encapsulated data interface based on a protocol type. The video acquisition apparatus is configured to acquire a to-be-processed video. The in-vehicle infotainment/controller is configured to perform, after extracting a plurality of first video frames from the to-be-processed video to obtain a first video frame sequence, key object recognition on the first video frames, determine, if key objects are recognized from the first video frames, an image region where the key objects are located as a detected key image region, replace original images therein with predetermined images to obtain first anonymized frames, and replace the first video frames in the first video frame sequence until all the first video frames have been replaced to obtain a first anonymized frame sequence. The T-BOX (vehicle networking system) is configured to control the in-vehicle infotainment controller to communicate so as to send a processed anonymized video to the cloud server and store the anonymized video at a cloud. The mobile phone client may acquire the processed anonymized video in the cloud server as required.

Embodiments of the present disclosure further provide an electronic device, including: one or more processors; and a storage apparatus, configured to store one or more programs which, when executed by the one or more processors, cause the electronic device to implement the video anonymization method provided in each of the foregoing embodiments.

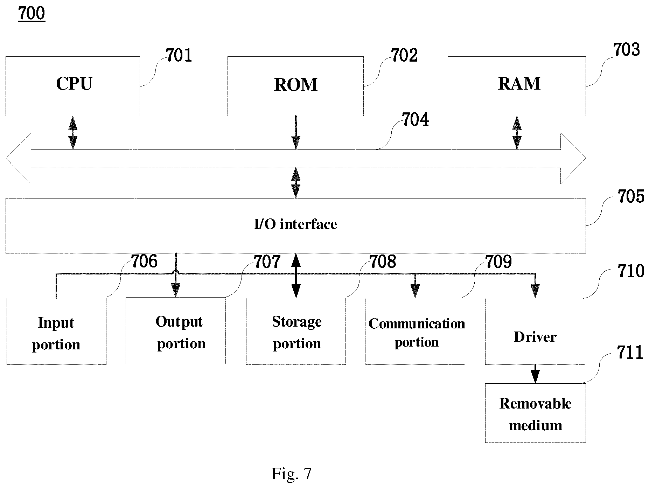

Fig. 7 is a schematic structural diagram of a computer system of an electronic device according to an exemplary embodiment of the present disclosure. It is to be noted that a computer system 700 of an electronic device shown in Fig. 7 is merely an example and should not impose any limitation on the functions and scope of use of the embodiments of the present disclosure.

As shown in Fig. 7, the computer system 700 includes a central processing unit (CPU) 701 that may perform various suitable actions and processes, such as implementing the method in the foregoing embodiments, according to programs stored in a read-only memory (ROM) 702 or loaded from a storage portion into a random access memory (RAM) 703. In the RAM 703, various programs and data required for the operation of the system are also stored. The CPU 701, the ROM 702, and the RAM 703 are connected to each other via a bus. An input/output (I/O) interface 705 is also connected to a bus 704.

The following components are connected to the I/O interface 705: an input portion 706 including a keyboard, a mouse, and the like; an output portion 707 including, for example, a cathode ray tube (CRT), a liquid crystal display (LCD), a speaker, and the like; a storage portion 708 including a hard disk and the like; and a communication portion 709 including a network interface card such as a local area network (LAN) card and a modem. The communication portion performs communication processing via a network such as the Internet. A driver is also connected to the I/O interface 705 as required. A removable medium 711, such as a magnetic disk, an optical disk, a magneto-optical disk, and a semiconductor memory, is installed on a driver 710 as required, whereby a computer program read therefrom is installed into the storage portion 708 as required.

In particular, the processes described above with reference to the flowchart may be implemented as a computer software program according to the embodiments of the present disclosure. For example, the embodiments of the present disclosure include a computer program product including a computer program carried on a computer-readable medium. The computer program includes a computer program for implementing the method shown in the flowchart. In such embodiments, the computer program may be downloaded and installed from a network via the communications portion 709, and/or installed from the removable medium 711. The computer program, when executed by the central processing unit (CPU) 701, performs the various functions defined in the system of the present disclosure.

It is to be noted that the computer-readable medium shown in the embodiments of the present disclosure may be either a computer-readable signal medium or a computer-readable storage medium or any combination thereof. The computer-readable storage medium may be, for example, an electronic, magnetic, optical, electromagnetic, infrared, or semiconductor system, apparatus, or device, or any combination thereof. More specific examples of the computer-readable storage medium may include, but are not limited to, an electrical connection having one or more wires, a portable computer disk, a hard disk, a random access memory (RAM), a read-only memory (ROM), an erasable programmable read only memory (EPROM), a flash memory, an optical fiber, a compact disc read-only memory (CD-ROM), an optical storage device, a magnetic storage device, or any suitable combination thereof. In the present disclosure, the computer-readable signal medium may include data signals embodied in baseband or propagated as part of a carrier wave carrying a computer-readable computer program. Such propagated data signals may take many forms, including but not limited to, electromagnetic signals, optical signals, or any suitable combination thereof. The computer-readable signal medium may also be any computer-readable medium other than the computer-readable storage medium. The computer-readable medium may send, propagate, or transmit programs for use by or in connection with an instruction execution system, apparatus, or device. A computer program embodied on the computer-readable medium may be transmitted over any suitable medium including, but not limited to, wireless, wired, or any suitable combination thereof.

The flowcharts and block diagrams in the drawings illustrate the architecture, functions, and operations of possible implementations of systems, methods, and computer program products according to various embodiments of the present disclosure. Each block in the flowchart or block diagrams may represent a module, a program segment, or a portion of code, which includes one or more executable instructions for implementing specified logical functions. It is also to be noted that in some alternative implementations, the functions labeled in the blocks may occur out of the order labeled in the drawings. For example, two blocks shown in succession may in fact be executed substantially concurrently or the blocks may sometimes be executed in the reverse order, depending upon the functions involved. It will also be noted that each block of the block diagrams or flowcharts, and combinations of blocks in the block diagrams or flowcharts, may be implemented by special purpose hardware-based systems which perform specified functions or operations, or combinations of special purpose hardware and computer instructions.

In the corresponding drawings of the foregoing embodiments, connecting lines may represent connection relationships between various components to represent more constituent signal paths (constituent signal path) and/or one or more ends of some lines have an arrow to represent a main information flow. The connecting lines serve as an identifier, not a limitation on the scheme, but the use of these lines in combination with one or more exemplary embodiments helps to more easily connect circuits or logic units. Any represented signal (as determined by design requirements or preferences) may include one or more signals that may be transmitted in virtually any one direction and that may be implemented in any suitable type of signaling scheme.

The units described in connection with the embodiments of the present disclosure may be implemented in software or hardware, and may be disposed in a processor. The names of these units do not in some cases constitute a limitation on the units.

Another aspect of the present disclosure also provides a computer-readable storage medium including a computer program stored thereon. The computer program, when executed by a processor, implements an in-vehicle infotainment system application right management method as mentioned above. The computer-readable storage medium may be included in the electronic device described in the foregoing embodiments or may exist separately without being fitted into the electronic device.

It is to be noted that although several modules or units of a device for action execution have been mentioned in the above detailed description, such a division is not mandatory. In practice, the features and functions of two or more modules or units described above may be embodied in one module or unit according to implementations of the present disclosure. Conversely, the features and functions of one module or unit described above may be embodied by being further divided into a plurality of modules or units.

From the above description of the implementations, those skilled in the art will readily appreciate that the example implementations described herein may be implemented in software, or implemented in software in combination with necessary hardware. Therefore, the technical solution according to the implementations of the present disclosure may be embodied in the form of a software product. The software product may be stored in a non-volatile storage medium (which may be a CD-ROM, a U disk, a mobile hard disk, and the like) or on a network, and includes several instructions to enable a computing device (which may be a personal computer, a server, a touch terminal, or a network device, and the like) to implement the method according to the implementations of the present disclosure.

It is to be noted that the present disclosure is operational with numerous general purpose or special purpose computing system environments or configurations, for example, personal computers, server computers, hand-held or portable devices, tablet-type devices, multiprocessor systems, microprocessor-based systems, set top boxes, programmable consumer electronics, network PCs, minicomputers, mainframe computers, distributed computing environments that include any of the above systems or devices, and the like.

Other implementation schemes of the present disclosure will be apparent to those skilled in the art from consideration of the specification and practice of the implementations disclosed herein. The present disclosure is intended to cover any variations, uses, or adaptations of the present disclosure that follow the general principles of the present disclosure and include common sense or conventional techniques in the art that are not disclosed herein.

It will be understood that the foregoing is merely illustrative of the preferred embodiments of the present disclosure and is not intended to limit the implementation schemes of the present disclosure. According to the main idea and spirit of the present disclosure, those of ordinary skill in the art may easily make corresponding variations or modifications, and therefore, the scope of protection of the present disclosure will be the scope of protection claimed in the claims.

## Claims

1. A video anonymization method, the video anonymization method comprising:
extracting a plurality of first video frames from a to-be-processed video to obtain a first video frame sequence, wherein initial sorts of at least two first video frames are not adjacent, and the initial sorts are sorts of the video frames in the to-be-processed video;
performing key object recognition on the first video frames;
determining, if key objects are recognized from the first video frames, an image region where the key objects are located as a detected key image region;
replacing original images in the detected key image region with predetermined images to obtain first anonymized frames; and
replacing the first video frames in the first video frame sequence with the first anonymized frames until all first target frames have been replaced to obtain a first anonymized frame sequence, the first target frames being the first video frames with the key objects.

2. The video anonymization method according to claim 1, wherein the performing key object recognition on the first video frames comprises:
performing image segmentation on each first video frame to obtain a plurality of feature frame image regions;
inputting a plurality of feature frame images into a predetermined key object recognition model for key object recognition to obtain at least one feature frame image region containing key objects; and
labeling the at least one feature frame image region containing key objects to obtain at least one detected key image region.

3. The video anonymization method according to claim 2, wherein the predetermined key object recognition model is constructed by:
acquiring a plurality of different frame image data as sample image data, the frame image data comprising key object image data;
performing key object feature labeling on a key object image region in the sample image data to obtain a sample data set; and
establishing a deep learning model based on the sample data set, training the deep learning model to obtain a key object recognition model, and determining the key object recognition model as the predetermined key object recognition model.

4. The video anonymization method according to claim 1, after determining an image region where the key objects are located as a detected key image region, the video anonymization method further comprising:
extracting a plurality of second video frames from the to-be-processed video, the second video frames being different from the first video frames, and an initial sort of each second video frame being adjacent to the initial sort of at least one first video frame;
determining a position change trajectory according to detection position information of the detected key image region in at least part of the first video frames;
predicting a predicted key image region position in the second video frame based on the position change trajectory to obtain each predicted key image region position in the second video frame; and
replacing original images in the predicted key image region with predetermined images to obtain second anonymized frames.

5. The video anonymization method according to claim 4, wherein the predicting a predicted key image region position in the second video frame based on the position change trajectory comprises:
determining, if a sort gap between the initial sorts of at least two first video frames and the initial sort of the second video frame is less than a predetermined gap, the first video frames as associated video frames of the second video frame;
acquiring detection position information of the detected key image region in each associated video frame; and
generating the position change trajectory based on each detection position information to fit the predicted key image region position in the second video frame through the position change trajectory.

6. The video anonymization method according to claim 4, after replacing original images in the predicted key image region with predetermined images to obtain second anonymized frames, the video anonymization method further comprising:
replacing the second video frames in a second video frame sequence with the second anonymized frames until all the second video frames have been replaced to obtain a second anonymized frame sequence.

7. The video anonymization method according to claim 6, after obtaining a second anonymized frame sequence, the video anonymization method further comprising:
arranging the second anonymized frame sequence and the first anonymized frame sequence according to an initial sort to obtain an anonymized output frame sequence.

8. The video anonymization method according to claim 7, after sequentially interpolating the second anonymized frame sequence into the first anonymized frame sequence to obtain an anonymized output frame sequence, the video anonymization method further comprising:
acquiring frame rate information of the to-be-processed video; and
performing frame rate adjustment on the anonymized output frame sequence according to the frame rate information to obtain an anonymized output video.

9. The video anonymization method according to any one of claims 1 to 8, before extracting a plurality of first video frames from a to-be-processed video, the video anonymization method further comprising:
acquiring a to-be-processed video, and performing image desensitization processing on an initial frame of the to-be-processed video, the image desensitization processing comprising at least one of privacy information clearing and image noising.

10. A video anonymization apparatus, the video anonymization apparatus comprising:
a video frame acquisition module, configured to extract a plurality of first video frames from a to-be-processed video to obtain a first video frame sequence, wherein initial sorts of at least two first video frames are not adjacent, and the initial sorts are sorts of the video frames in the to-be-processed video;
a key object recognition module, configured to perform key object recognition on the first video frames, and determine, if key objects are recognized from the first video frames, an image region where the key objects are located as a detected key image region;
an anonymization module, configured to replace original images in the detected key image region with predetermined images to obtain first anonymized frames; and
an anonymized frame replacement module, configured to replace the first video frames in the first video frame sequence with the first anonymized frames until all first target frames have been replaced to obtain a first anonymized frame sequence, the first target frames being the first video frames with the key objects.

11. An electronic device, comprising:
one or more processors; and
a storage apparatus, configured to store one or more programs which, when executed by the one or more processors, cause the electronic device to implement the video anonymization method according to any one of claims 1 to 9.

12. A computer-readable storage medium, comprising computer-readable instructions stored thereon, the computer-readable instructions, when executed by a processor of a computer, causing the computer to implement the video anonymization method according to any one of claims 1 to 9.
